# EUROPÄISCHE PATENTSCHRIFT

(11) **EP 1 834 996 B1**
(45) Veröffentlichungstag und Bekanntmachung des Hinweises auf die Patenterteilung: **27.05.2009**
(21) Anmeldenummer: 06290428.9
(22) Anmeldetag: 14.03.2006
(51) Int. Cl.: C09D 11/00, C09D 17/00, C09B 67/00

(54) **Pigmentzubereitungen auf Basis von PY 155**
Pigment preparations based on PY 155
Preparations pigmentaire a base de PY 155

(43) Veröffentlichungstag der Anmeldung: 19.09.2007
(73) Patentinhaber: Clariant Finance (BVI) Limited, Road Town, Tortola (VG)
(72) Erfinder: Schweikart, Karl-Heinz, Dr., 65760 Eschborn (DE); Lerch, Jean-Philippe, Dr., 68250 Rouffach (FR); Pourcheron, Laurent, 68440 Dietwiller (FR)
(74) Vertreter: Hütter, Klaus

(56) Entgegenhaltungen:
- EP-A- 0 908 789
- EP-A- 1 329 774
- DE-A1- 10 316 402
- GB-A- 2 356 634
- GB-A- 2 356 866
- PATENT ABSTRACTS OF JAPAN Bd. 2003, Nr. 12, 5. Dezember 2003 (2003-12-05) & JP 2005 031163 A (CANON INC), 3. Februar 2005 (2005-02-03)
- PATENT ABSTRACTS OF JAPAN Bd. 2003, Nr. 12, 5. Dezember 2003 (2003-12-05) & JP 2005 338132 A (CANON INC), 8. Dezember 2005 (2005-12-08)

## Beschreibung

Die vorliegende Erfindung betrifft eine neue, verbesserte Pigmentzubereitung auf Basis von C.I. Pigment Yellow 155 (nachstehend PY 155 genannt), ein Verfahren zu ihrer Herstellung und ihre Verwendung, insbesondere im Ink-Jet-Druck.

Pigmentzubereitungen sind Kombinationen von Basispigmenten und so genannten Pigmentdispergatoren, das sind mit spezifisch wirksamen Gruppen substituierte Pigmente. Die Pigmentdispergatoren werden den Pigmenten zugesetzt, um die Dispergierung in den Anwendungsmedien, insbesondere in Lacken und Druckfarben, zu erleichtern und um die rheologischen und coloristischen Eigenschaften der Pigmente zu verbessern.

Beim Einsatz von Pigmenten zum Färben von hochmolekularen organischen Materialien werden hohe Anforderungen an die anwendungstechnischen Eigenschaften der Pigmente gestellt, wie hohe Farbstärken, leichte Dispergierbarkeit, hohe Buntheit (Chroma) und Reinheit des Farbtons und gute Licht- und Wetterechtheit. Es ist eine möglichst universelle Einsetzbarkeit zum Färben von verschiedenen hochmolekularen Systemen wie beispielsweise Druckfarben, Lacke oder Kunststoffe wünschenswert, und beispielsweise bei Lacken oder Druckfarben sowohl von lösemittelhaltigen als auch von wässrigen Systemen. Sowohl bei Lacken als auch bei Druckfarben geht der Trend hin zu hohen Pigmentkonzentrationen in der Anreibung, daher werden hochpigmentierte Lack- und Druckfarbenkonzentrate oder Mahlgüter (millbase) mit dennoch niedriger Viskosität gefordert, ebenso muß die Viskosität des fertigen Lackes oder Druckfarbe anwendungsgerecht sein. Bei Druckfarben wird eine hohe Transparenz, in Lacksystemen sind einwandfreie Überlackierechtheiten und Lösemittelechtheiten, Beständigkeit gegen Alkali und Säure, und insbesondere im Falle von Metalliclackierungen hohe Transparenz und brillante Farbtöne gewünscht. Im Falle der Kunststoffeinfärbung wird hohe Ausblutechtheit, Hitzestabilität und gute Dispergierbarkeit verlangt, was z.B. in hohen Farbstärken zum Ausdruck kommt.

Außerdem ist eine möglichst universelle Einsetzbarkeit in verschiedenen Systemen, beispielsweise in wässrigen und lösemittelhaltigen Systemen erwünscht.

Weitere Einsatzgebiete von Pigmenten sind beispielsweise elektrophotographische Toner und Entwickler, Tinten wie beispielsweise Ink-Jet-Tinten oder e-inks, Farbfilter, oder Pulverlacke, die jeweils ihre zusätzlichen, speziellen Anforderungen haben.

Beim Tintenstrahl- oder Ink-Jet-Verfahren handelt es sich um ein berührungloses Druckverfahren, bei dem Tröpfchen der Aufzeichnungsflüssigkeit aus einer oder mehreren Düsen auf das zu bedruckende Substrat gelenkt werden. Um Drucke von exzellenter Qualität zu erhalten, müssen die Aufzeichnungsflüssigkeiten und die darin enthaltenen Farbmittel hohen Anforderungen genügen, insbesondere auch im Hinblick auf den gewünschten Farbton und die Zuverlässigkeit während des Druckvorgangs. Neben farbstoffbasierenden Tinten werden verstärkt pigmentierte Tinten im Ink-Jet-Druck eingesetzt. Die Feinteiligkeit der in den Tinten enthaltenen Pigmente ist eine Grundvoraussetzung für deren Anwendung im Ink-Jet-Druck, zum einen um ein Verstopfen der Düsen zu verhindern, zum anderen aber auch um eine hohe Transparenz und einen gewünschten, beispielsweise grünstichigen, Farbton zu erzielen.

Der Einsatz eines Disazopigmentes der Formel (I) in Ink-Jet-Tinten ist bekannt und beispielsweise in der EP-A-0 908 789 beschrieben. Das Pigment mit der Struktur gemäß Formel (I) ist unter der Bezeichnung C.I. Pigment Yellow 155 im Handel.

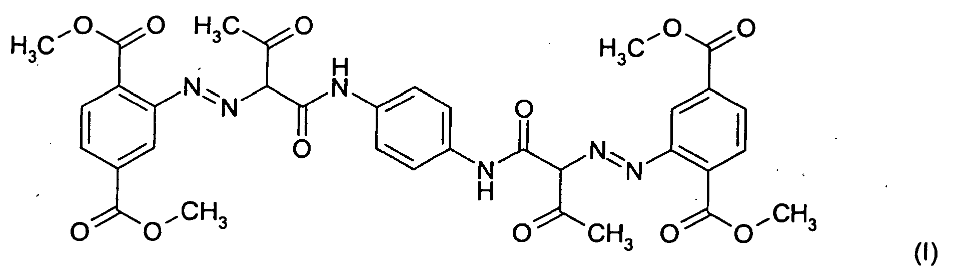

Dabei ist die Formel (I) als idealisierte Darstellung zu verstehen. Disazopigmente der Formel (I) können auch teilweise oder vollständig in einer anderen tautomeren und/oder cis/trans-isomeren Form vorliegen.

Verfahren zur Herstellung eines Disazopigmentes der Formel (I) durch Kupplung von diazotiertem 2-Aminoterephthalsäuredimethylester mit 1,4-Bis(acetoacetylamino)benzol sind beispielsweise in der US-A-3,997,521 (Beispiel 20) und in der DE-A-20 58 849 (Beispiel 72) offenbart.
Die erhaltenen Produkte, im folgenden Rohpigmente genannt, sind jedoch meist von schlechter Kristallqualität, sind agglomeriert und zeigen noch nicht die gewünschten anwendungstechnischen Eigenschaften. Zum Erzielen optimaler Anwendbarkeit wird oft eine Nachbehandlung, im allgemeinen als Finish bezeichnet, durchgeführt, beispielsweise in Lösemitteln und gegebenenfalls unter Zusatz oberflächenaktiver Mittel.
So offenbart die GB-A-2 239 254 ein Verfahren, bei dem das Rohpigment mit der Struktur gemäß der Formel (I) nach der Synthese in Dimethylformamid erhitzt wird.

Die US-A-4,003,886 beschreibt ein Verfahren, bei dem Disazopigmente nach der Synthese einem Finish mit o-Dichlorbenzol bei einer Temperatur von 130 bis 135°C unterworfen werden.

Die JP1241365 schlägt den Finish eines Rohpigmentes, insbesondere eines Azo-, Chinacridon- oder Dioxazinpigmentes, in einem Gemisch aus Wasser und organischem Lösungsmittel bei niedrigerer Temperatur (<100°C) und alkalischem pH-Wert in Gegenwart eines oberflächenaktiven Additivs, insbesondere eines Polyoxyethylenalkylethers, vor.

Kombinationen aus dem Disazopigment der Formel (I) und Sulfonsäuregruppen tragenden Monoazo- bzw. Disazopigmentderivaten sind bekannt. Die GB-A-2 356 634 und die GB-A-2 356 866 offenbaren mit Carboxyl-/Sulfonsäuregruppen substituierte Monoazo- bzw. Disazoverbindungen und ihren Einsatz zusammen mit C.I. Pigment Yellow 155 in Pigment- und Tintenzusammensetzungen. Die Monoazo- bzw. Disazoverbindungen werden dabei dem C.I. Pigment Yellow 155 während eines Dispergierschrittes zur Herstellung einer Pigmentpräparation in Form ihrer wässrigen Lösungen zugegeben. Die erhaltenen durchschnittlichen Partikelgrößen der entsprechenden Pigmentdispersionen und Ink-Jet-Tinten (> 160 nm) entsprechen nicht den für Ink-Jet-Anwendungen bevorzugten kleinen Teilchengrößen von < 100 nm.

Die anwendungstechnischen Eigenschaften von PY 155 genügen nicht mehr in allen Punkten den oben beschriebenen Anforderungen, insbesondere hinsichtlich der Feinteiligkeit und Transparenz in verschiedenen Anwendungsmedien.

Die EP-A-0 076 024 offenbart Disazoverbindungen, die zur Verflüssigung von Pigmentdispersionen in nichtwässrigen Systemen dienen. Die WO-2004/029167 A1 offenbart Pigmentzubereitungen, die die in der EP-A-0 076 024 offenbarten Verbindungen enthalten.

Es bestand der Bedarf nach einem Disazopigment, das die Nachteile der bekannten Disazopigmente überwindet und den oben genannten Anforderungen in den verschiedenen Anwendungsmedien genügt. Insbesondere bestand Bedarf an einem PY 155 mit höherem Chroma und besserer Feinteiligkeit, insbesondere für Ink-Jet-Anwendungen.

Überraschenderweise konnte die Aufgabe durch die nachstehend beschriebene Pigmentzubereitung gelöst werden.

Gegenstand der Erfindung ist eine Pigmentzubereitung auf Basis von C.I. Pigment Yellow 155, enthaltend 0,1 bis 50 Gew.-%, vorzugsweise 0,5 bis 20 Gew.-%, besonders bevorzugt 1 bis 10 Gew.-%, insbesondere 1 bis 5 Gew.-%, bezogen auf das Gewicht von C.I. Pigment Yellow 155, mindestens eines Pigmentdispergators aus der Gruppe der mit mindestens einer Sulfonsäuregruppe substituierten Monoazo- oder Disazopigmente, dadurch gekennzeichnet, dass sie in einem lösemittelbasierenden Alkyd-Melaminharz-Lack mit 6,7 Gew.-% Konzentration der Pigmentzubereitung ein Chroma C größer als 53, bevorzugt größer als 55 und besonders bevorzugt größer als 57 im CIELAB-System, und/oder dass sie in einem wässrigen Basisfirnis-System in einer Weissaufhellung mit 0,2 Gew.-% Konzentration der Pigmentzubereitung in der Weissaufhellung ein Chroma C größer als 35, bevorzugt größer als 36 und besonders bevorzugt größer als 37 im CIELAB-System aufweist.

Gegenstand der Erfindung ist auch ein Verfahren zur Herstellung der erfindungsgemäßen Pigmentzubereitung, dadurch gekennzeichnet, dass ein PY 155-Rohpigment in einer Mischung aus Wasser und einem organischen Lösemittel mit einem Siedepunkt (bei Normaldruck) von über 100°C, vorzugsweise einem aromatischen Lösemittel, insbesondere o-Dichlorbenzol, bei alkalischem pH, insbesondere bei pH größer oder gleich 9, und in Gegenwart von 0,1 bis 50 Gew.-%, vorzugsweise 0,5 bis 20 Gew.-%, besonders bevorzugt 1 bis 10 Gew.-%, insbesondere 1 bis 5 Gew.-%, bezogen auf das Gewicht von C.I. Pigment Yellow 155, des Pigmentdispergators auf eine Temperatur von über 60°C, vorzugsweise über 90°C, erhitzt wird.

Als PY 155-Rohpigment wird zweckmäßigerweise ein Disazopigment der Formel (I) eingesetzt, das nach bekannten Verfahren hergestellt werden kann und in amorpher Form, kristallin oder als Mischung aus amorpher und kristalliner Form vorliegen kann. Die kristalline Form kann dabei jeweils aus einer bestimmten Kristallmodifikation (Phase) oder aus einer Mischung aus mehreren Kristallmodifikationen bestehen. Es kann auch eine Mischung aus unterschiedlichen Rohpigmenten der Formel (I) eingesetzt werden.

Falls erforderlich, kann das aus der Synthese erhaltene Rohpigment einer üblichen Feinverteilung, z.B. durch Acidpasting, Acidswelling, Trocken- oder Nassmahlung, unterworfen werden.

Das Rohpigment kann in trockener Form oder als Presskuchen beim Finish eingesetzt werden, bevorzugt wird es in trockener Form eingesetzt.
Die Trocknung erfolgt dabei nach bekannten Verfahren, beispielsweise durch Schranktrocknung, Bandtrocknung, Schaufelradtrocknung, Taumeltrocknung, Kontakttrocknung, Spinflashtrocknung oder Sprühtrocknung.

Das zum erfindungsgemäßen Finish eingesetzte Lösemittelsystem besteht aus Wasser, organischem Lösemittel und einer zum Einstellen eines alkalischen pH erforderlichen Menge einer Base.
Als organische Lösemittel kommen im Prinzip alle organischen Lösemittel sowie Mischungen dieser organischen Lösemittel in Frage, die einen Siedepunkt von über 100°C, bevorzugt über 110°C, aufweisen. Als besonders geeignet zeigen sich dabei aromatische Lösemittel. Diese können durch ein oder mehrere Halogenatome, wie beispielsweise Chlor, Brom oder Iod, Nitro und/oder C₁-C₄-Alkyl substituiert sein.

Insbesondere ist dabei an substituiertes Benzol wie beispielsweise Chlorbenzol, Dichlorbenzole, Trichlorbenzole oder Brombenzol gedacht. Als ganz besonders geeignet zeigt sich o-Dichlorbenzol.

Um einen alkalischen pH einzustellen, werden als Basen bevorzugt Alkali- und/oder Erdalkalihydroxide, ggf. in Form ihrer wässrigen Lösungen, wie Natrium- oder Kaliumhydroxid verwendet. Denkbar sind auch stickstoffhaltige Basen, wie z.B. Ammoniak oder Methylamin.
Um den gewünschten Effekt zu erzielen, ist ein pH von größer oder gleich 9,0 vorteilhaft, bevorzugt pH größer oder gleich 10, insbesondere pH größer oder gleich 10,5. Gewöhnlich wird bei einem pH größer oder gleich 11,0 gearbeitet. Die Base kann auch in großen Mengen von bis zu 20 Gew.-%, bevorzugt bis zu 15 Gew.-%, insbesondere bis zu 10 Gew.-%, bezogen auf die Menge an Wasser, eingesetzt werden.

Das Gewichtsverhältnis Wasser zu organischem Lösemittel beträgt 5 zu 95 bis 95 zu 5, bevorzugt 7,5 zu 92,5 bis 92,5 zu 7,5, insbesondere 10 zu 90 bis 90 zu 10 und besonders bevorzugt 20 zu 80 bis 80 zu 20.
Die Gesamtmenge Wasser und organisches Lösemittel liegt im Bereich von 0,5 bis 40, bevorzugt von 1 bis 20, insbesondere von 2 bis 15, Gewichtsteilen pro Gewichtsteil Pigment.
Das Lösemittelsystem kann ein- oder zweiphasig vorliegen. Bevorzugt werden solche organischen Lösemittel eingesetzt, die mit Wasser nicht vollständig mischbar sind, und der Finish wird bevorzugt in einem zweiphasigen Lösemittelsystem mit einer wässrigen und einer organischen Phase durchgeführt.
Der erfindungsgemäße Finish kann bei einer Temperatur von 60 bis 250°C, bevorzugt 90 bis 200°C, insbesondere 100 bis 190°C, und zweckmäßigerweise für eine Zeit von 5 Minuten bis 24 Stunden, besonders 5 Minuten bis 18 Stunden, insbesondere 5 Minuten bis 12 Stunden, durchgeführt werden. Bevorzugt wird der Finish bei Siedetemperatur, insbesondere bei Temperaturen oberhalb des Siedepunktes des Lösemittelsystems unter Druck durchgeführt.

Pigmentdispergatoren, die sich von Monoazopigmenten ableiten, sind beispielsweise solche der Formel (II) 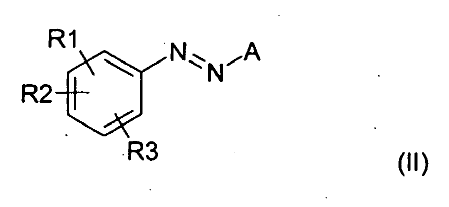 , worin A für einen Rest der Formel (III) oder (IV) steht 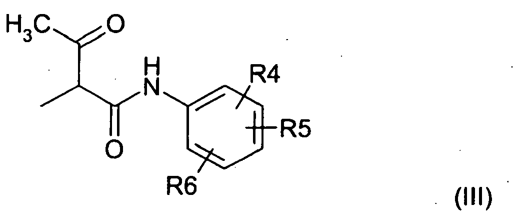 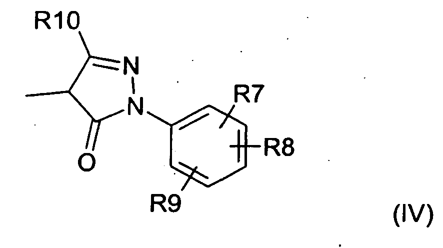 und worin
R1, R2, R3, R4, R5, R6, R7, R8 und R9 unabhängig voneinander H, Halogen, beispielsweise F, Cl, Br oder I, SO₃M, ein substituierter oder unsubstituierter, verzweigter oder unverzweigter C₁-C₁₀-Alkyl- oder C₃-C₁₀-Cycloalkylrest oder ein substituierter oder unsubstituierter, verzweigter oder unverzweigter C₂-C₁₀-Alkenyl- oder C₃-C₁₀-Cycloalkenylrest, Aryl, Aryloxy, Aryl(C₁-C₄)alkyl, Hetaryl, Hetaryloxy, Hetaryl(C₁-C₄)alkyl oder C₁-C₁₀-Alkoxy sind,
R10 H, COOM, COO(C₁-C₁₀)alkyl, ein substituierter oder unsubstituierter, verzweigter oder unverzweigter C₁-C₁₀-Alkyl- oder C₃-C₁₀-Cycloalkylrest ist, und
M H, ein einwertiges Metallkation, das Äquivalent eines mehrwertigen Kations, NH₄⁺, ein sekundäres, tertiäres oder quartäres Ammoniumion bedeuten, mit der Maßgabe, dass mindestens einer der beiden Phenylringe mit mindestens einer Sulfonsäuregruppe substituiert ist.

Unter "Aryl" versteht man dabei sowie auch bei den nachstehenden Definitionen einen aromatischen Rest, der bevorzugt 6 bis 15 C-Atome enthält. Beispiele hierfür sind Phenyl, Naphthyl, Anthryl und Phenanthryl.

Unter "Hetaryl" versteht man dabei sowie auch in den nachstehenden Definitionen einen aromatischen Rest, der bevorzugt neben 1 bis 10 C-Atomen 1, 2, 3 oder 4 Heteroatome aus der Gruppe O, N, S oder P enthält. Beispiele hierfür sind Pyrrolyl, Furyl, Thiophenyl, Indolyl, Isoindolyl, Indolizinyl, Benzofuryl, Benzothiophenyl, Pyrazolyl, Imidazolyl, Oxazolyl, Isoxazolyl, Thiazolyl, Isothiazolyl, Triazolyl, Tetrazolyl, Pyridyl, Chinolinyl, Isochinolinyl, Pyridazinyl, Pyrimidinyl, Pyrazinyl und Triazinyl.

In einer bevorzugten Ausführungsform der vorliegenden Erfindung kommen dabei Pigmentdispergatoren der Formel (V) zum Einsatz

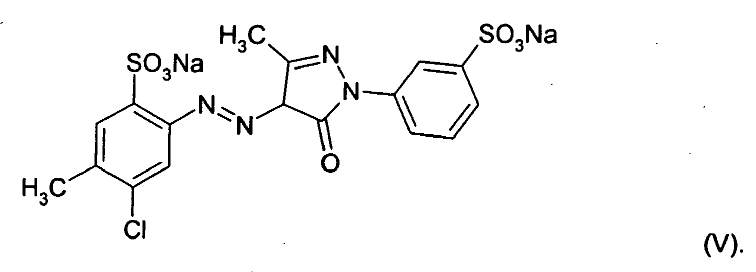

Pigmentdispergatoren, die sich von Disazopigmenten ableiten, sind insbesondere solche der Formel (VI) 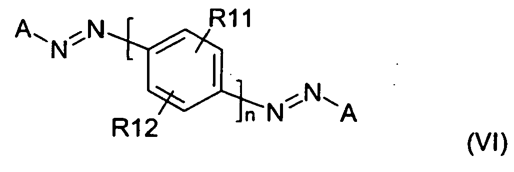 worin A die oben beschriebene Bedeutung besitzt und
R11 und R12 unabhängig voneinander
H, Halogen, beispielsweise F, Cl, Br oder I, ein substituierter oder unsubstituierter, verzweigter oder unverzweigter C₁-C₁₀-Alkyl- oder C₃-C₁₀-Cycloalkylrest oder ein substituierter oder unsubstituierter, verzweigter oder unverzweigter C₂-C₁₀-Alkenyl- oder C₃-C₁₀-Cycloalkenylrest oder C₁-C₁₀-Alkoxy sind, und
n 1 oder 2, vorzugsweise 2, bedeutet,
mit der Maßgabe, dass mindestens einer der beiden terminalen Phenylringe im Rest A mit mindestens einer Sulfonsäuregruppe substituiert ist.

Das Ammoniumsalz wird bevorzugt durch ein quaternäres Ammoniumion gebildet, welches mindestens eine lineare gesättigte Kohlenwasserstoffkette mit mehr als 6 Kohlenstoffatomen besitzt, insbesondere zwei lineare gesättigte Kohlenwasserstoffketten mit jeweils mehr als 12 Kohlenstoffatomen, wie beispielsweise Stearylbenzyl- oder Cocosalkyl-dimethyl-benzylammonium oder -2,4-dichlorbenzylammonium, Hexadecyl-, Stearyl-, Dodecyl-, Octadecyl- oder Cetyltrimethylammonium, Di-hydriertes Talgfettalkyl-, Dicocosalkyl-, Dioctadecyl- oder Distearyldimethylammonium, Oleyl- oder Cocos-di(2-hydroxyethyl)methylammonium, hydriertes Polyoxyethylen(15)talgmethylammonium, N,N,N',N',N'-Pentamethyl-N-talg-1,3-propandiammonium, permethyliertes N-Stearyldiethylentriamin, permethyliertes N-Stearyltriethylentetramin, N-(3-Dodecyloxy-2-hydroxypropyl)-octadecyldimethylammonium, Methyl-tri(2-octyl)ammonium, N,N-Di-(beta-stearoylethyl)-N,N-dimethylammonium, Laurylpyridinium, 2-Hydroxy-[5-chlor-, 5-isooctyl-, 5-t-butyl- oder n-nonyl-]1,3-xylylen-bispyridinium, 2-Methoxy-5-isooctyl-1,3-xylylen-bispyridinium, 2-Hydroxy-5-isooctyl-1,3-xylylen-bischinolinium, 2-Hydroxy-5-isooctyl-1,3-xylylenbisisochinolinium oder Behenyltrimethylammonium.

Pigmentdispergatoren, die sich von Disazopigmenten ableiten, sind bekannt und beispielsweise in der US-A-4,461,647 beschrieben.

Besonders bevorzugt sind Pigmentdispergatoren der Formel (VII)

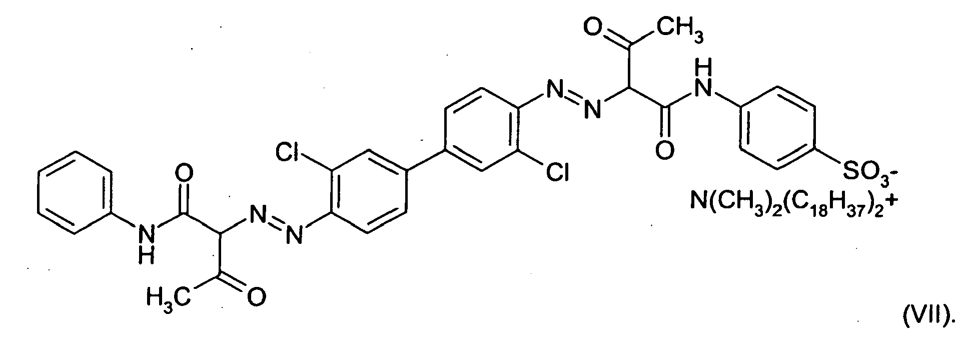

Die nach dem erfindungsgemäßen Verfahren hergestellten Pigmentzubereitungen können mit den üblichen Methoden isoliert werden, beispielsweise durch Filtrieren, Dekantieren oder Zentrifugieren. Bevorzugt wird filtriert oder wasserdampfdestilliert. Lösemittel können auch durch Waschen entfernt werden. Die erfindungsgemäßen Pigmentzubereitungen können als vorzugsweise wässrige Presskuchen zum Einsatz kommen, in der Regel handelt es sich jedoch um getrocknete, feste Systeme von rieselfähiger, pulverförmiger Beschaffenheit oder um Granulate.

Nach der Synthese des Rohpigments, vor oder nach dem Finish oder auch nach der Trocknung können weitere Hilfsmittel zugesetzt werden, wie beispielsweise Tenside, nichtpigmentäre und pigmentäre Dispergiermittel, Füllstoffe, Stellmittel, Harze, Wachse, Entschäumer, Antistatika, Antistaubmittel, Extender, Farbmittel zum Nuancieren, Konservierungsmittel, Trocknungsverzögerungsmittel, Additive zur Steuerung der Rheologie, Netzmittel, Antioxidantien, UV-Absorber, Lichtstabilisatoren, oder eine Kombination davon.

Als Tenside kommen anionische oder anionaktive, kationische oder kationaktive und nichtionische oder amphotere Substanzen oder Mischungen dieser Mittel in Betracht.

Als anionaktive Substanzen kommen beispielsweise Fettsäuretauride, Fettsäure-N-methyltauride, Fettsäureisothionate, Alkylphenylsulfonate, beispielsweise Dodecylbenzolsulfonsäure, Alkylnaphthalinsulfonate, Alkylphenolpolyglykolethersulfate, Fettalkoholpolyglykolethersulfate, Fettsäureamid-polyglykolethersulfate, Alkylsulfosuccinamate, Alkenylbernsteinsäurehalbester, Fettalkoholpolyglykolethersulfosuccinate, Alkansulfonate, Fettsäureglutamate, Alkylsulfosuccinate, Fettsäuresarkoside; Fettsäuren, beispielsweise Palmitin-, Stearin- und Ölsäure; die Salze dieser anionischen Substanzen und Seifen, beispielsweise Alkalisalze von Fettsäuren, Naphthensäuren und Harzsäuren, beispielsweise Abietinsäure, alkalilösliche Harze, beispielsweise kolophoniummodifizierte Maleinatharze und Kondensationsprodukte auf Basis von Cyanurchlorid, Taurin, N,N'-Diethylaminopropylamin und p-Phenylendiamin in Betracht. Bevorzugt sind Harzseifen, d.h. Alkalisalze von Harzsäuren.

Als kationaktive Substanzen kommen beispielsweise quaternäre Ammoniumsalze, Fettaminoxalkylate, Polyoxyalkylenamine, oxalkylierte Polyamine, Fettaminpolyglykolether, primäre, sekundäre oder tertiäre Amine, beispielsweise Alkyl-, Cycloalkyl oder cyclisierte Alkylamine, insbesondere Fettamine, von Fettaminen oder Fettalkoholen abgeleitete Di- und Polyamine und deren Oxalkylate, von Fettsäuren abgeleitete Imidazoline, Polyaminoamido- oder Polyaminoverbindungen oder -harze mit einem Aminindex zwischen 100 und 800 mg KOH pro g der Polyaminoamido- oder Polyaminoverbindung, und Salze dieser kationenaktiven Substanzen, wie beispielsweise Acetate oder Chloride, in Betracht.

Als nichtionogene und amphotere Substanzen kommen beispielsweise Fettamincarboxyglycinate, Aminoxide, Fettalkoholpolyglykolether, Fettsäurepolyglykolester, Betaine, wie Fettsäureamid-N-propyl-betaine, Phosphorsäureester von aliphatischen und aromatischen Alkoholen, Fettalkoholen oder Fettalkoholpolyglykolethern, Fettsäureamidethoxylate, Fettalkohol-alkylenoxid-Addukte und Alkylphenolpolyglykolether in Betracht.

Mit nichtpigmentären Dispergiermitteln sind Substanzen gemeint, die strukturell nicht von organischen Pigmenten abgeleitet sind. Sie werden als Dispergiermittel entweder bereits bei der Herstellung von Pigmenten, oft aber auch bei der Einarbeitung der Pigmente in die zu färbenden Anwendungsmedien, beispielsweise bei der Herstellung von Lacken oder Druckfarben durch Dispergierung der Pigmente in den entsprechenden Bindemitteln, zugegeben. Es können polymere Substanzen sein, beispielsweise Polyolefine, Polyester, Polyether, Polyamide, Polyimine, Polyacrylate, Polyisocyanate, Blockcopolymere daraus, Copolymere aus den entsprechenden Monomeren oder Polymere einer Klasse, die mit wenigen Monomeren einer anderen Klasse modifiziert sind. Diese polymeren Substanzen tragen polare Ankergruppen wie beispielsweise Hydroxy-, Amino-, Imino- und Ammoniumgruppen, Carbonsäure- und Carboxylatgruppen, Sulfonsäure- und Sulfonatgruppen oder Phosphonsäure- und Phosphonatgruppen, und können auch mit aromatischen, nicht pigmentären Substanzen modifiziert sein. Nichtpigmentäre Dispergiermittel können des Weiteren auch chemisch mit funktionellen Gruppen modifizierte aromatische, nicht von organischen Pigmenten abgeleitete Substanzen sein. Derartige nichtpigmentäre Dispergiermittel sind dem Fachmann bekannt und zum Teil im Handel erhältlich (z.B. Solsperse^{®}, Avecia; Disperbyk^{®}, Byk-Chemie, Efka^{®}, Efka, SMA^{®}, Sartomer). Es sollen im Folgenden stellvertretend einige Typen genannt werden, zum Einsatz können jedoch prinzipiell beliebige andere, beschriebene Substanzen kommen, beispielsweise Kondensationsprodukte aus Isocyanaten und Alkoholen, Di- oder Polyolen, Aminoalkoholen oder Di- oder Polyaminen, Polymere aus Hydroxycarbonsäuren, Copolymere aus Olefinmonomeren oder Vinylmonomeren und ethylenisch ungesättigten Carbonsäuren und -estern, urethanhaltige Polymere von ethylenisch ungesättigten Monomeren, urethanmodifizierte Polyester, Kondensationsprodukte auf Basis von Cyanurhalogeniden, Nitroxylverbindungen enthaltende Polymere, Polyesteramide, modifizierte Polyamide, modifizierte Acrylpolymere, Dispergiermittel mit kammartiger Struktur aus Polyestern und Acrylpolymeren, Phosphorsäureester, von Triazin abgeleitete Polymere, modifizierte Polyether, oder von aromatischen, nichtpigmentären Substanzen abgeleitete Dispergiermittel. Dabei werden diese Grundstrukturen vielfach weiter modifiziert, beispielsweise durch chemische Umsetzung mit weiteren, funktionelle Gruppen tragenden Substanzen oder durch Salzbildung.

Mit Füllstoffen bzw. Extendern sind eine Vielzahl von Substanzen gemäß DIN 55943 und DIN EN 971-1 gemeint, beispielsweise die verschiedenen Typen von Talk, Kaolin, Glimmer, Dolomit, Kalk, Bariumsulfat oder Titandioxid.

Die erfindungsgemäßen Pigmentzubereitungen lassen sich zum Pigmentieren von hochmolekularen organischen Materialien natürlicher oder synthetischer Herkunft einsetzen, beispielsweise von Kunststoffen, Harzen, Lacken, Anstrichfarben, elektrophotographischen Tonern und Entwicklern, Elektretmaterialien, Farbfiltern sowie von Tinten, Druckfarben und Saatgut.

Hochmolekulare organische Materialien, die mit den erfindungsgemäßen Pigmentzubereitungen pigmentiert werden können, sind beispielsweise Celluloseverbindungen, wie beispielsweise Celluloseether und -ester, wie Ethylcellulose, Nitrocellulose, Celluloseacetate oder Cellulosebutyrate, natürliche Bindemittel, wie beispielsweise Fettsäuren, fette Öle, Harze und deren Umwandlungsprodukte, oder Kunstharze, wie Polykondensate, Polyaddukte, Polymerisate und Copolymerisate, wie beispielsweise Aminoplaste, insbesondere Harnstoff- und Melaminformaldehydharze, Alkydharze, Acrylharze, Phenoplaste und Phenolharze, wie Novolake oder Resole, Harnstoffharze, Polyvinyle, wie Polyvinylalkohole, Polyvinylacetale, Polyvinylacetate oder Polyvinylether, Polycarbonate, Polyolefine, wie Polystyrol, Polyvinylchlorid, Polyethylen oder Polypropylen, Poly(meth)acrylate und deren Copolymerisate, wie Polyacrylsäureester oder Polyacrylnitrile, Polyamide, Polyester, Polyurethane, Cumaron-Inden- und Kohlenwasserstoffharze, Epoxidharze, ungesättigte Kunstharze (Polyester, Acrylate) mit den unterschiedlichen Härtemechanismen, Wachse, Aldehyd- und Ketonharze, Gummi, Kautschuk und seine Derivate und Latices, Casein, Silikone und Silikonharze; einzeln oder in Mischungen.
Dabei spielt es keine Rolle, ob die erwähnten hochmolekularen organischen Verbindungen als plastische Massen, Schmelzen oder in Form von Spinnlösungen, Dispersionen, Lacken, Anstrichstoffen oder Druckfarben vorliegen. Je nach Verwendungszweck erweist es sich als vorteilhaft, die erfindungsgemäßen Pigmentzubereitungen als Blend oder in Form von Präparationen oder Dispersionen zu benutzen.

Gegenstand der vorliegenden Erfindung ist auch ein hochmolekulares organisches Material, enthaltend eine färberisch wirksame Menge einer erfindungsgemäßen Pigmentzubereitung.
Bezogen auf das zu pigmentierende, hochmolekulare organische Material setzt man die erfindungsgemäße Pigmentzubereitung meist in einer Menge von 0,01 bis 30 Gew.-%, vorzugsweise 0,1 bis 15 Gew.-%, ein.

Die erfindungsgemäßen Pigmentzubereitungen sind auch geeignet als Farbmittel in elektrophotographischen Tonern und Entwicklern, wie beispielsweise Ein- oder Zweikomponentenpulvertonern (auch Ein- oder Zweikomponenten-Entwickler genannt), Magnettoner, Flüssigtoner, Polymerisationstoner sowie Spezialtoner. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im nachhinein mit diesen Zusätzen modifiziert werden.

Des Weiteren sind die erfindungsgemäßen Pigmentzubereitungen geeignet als Farbmittel in Pulvern und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.

Außerdem sind die erfindungsgemäßen Pigmentzubereitungen als Farbmittel in Ink-Jet-Tinten auf wässriger und nichtwässriger Basis sowie in solchen Tinten, die nach dem Hot-Melt-Verfahren arbeiten, geeignet.

In den Ink-Jet-Tinten können die erfindungsgemäßen Pigmentzubereitungen auch mit anderen Farbmitteln wie beispielsweise anorganischen oder organischen Pigmente und/oder Farbstoffen nuanciert sein. Sie werden dabei in Tintensets, bestehend aus gelben, magenta, cyan und schwarzen Tinten, welche als Farbmittel Pigmente und/oder Farbstoffe enthalten, verwendet. Des Weiteren können sie in Tintensets verwendet werden, die zusätzlich eine oder mehrere der sogenannten "spot colors" in den Farben beispielsweise orange, grün, blau, golden und silber enthalten.
Bevorzugt ist dabei ein Satz von Drucktinten, dessen schwarze Präparation bevorzugt Ruß als Farbmittel enthält, insbesondere einen Gas- oder Furnaceruß; dessen Cyan-Präparation bevorzugt ein Pigment aus der Gruppe der Phthalocyanin-, Indanthron- oder Triarylcarboniumpigmente enthält, insbesondere die Colour Index Pigmente Pigment Blue 15, Pigment Blue 15:1, Pigment Blue 15:2, Pigment Blue 15:3, Pigment Blue 15:4, Pigment Blue 16, Pigment Blue 56, Pigment Blue 60 oder Pigment Blue 61; dessen Magenta-Präparation bevorzugt ein Pigment aus der Gruppe der Monoazo-, Disazo-, β-Naphthol, Naphthol AS-, verlackten Azo-, Metallkomplex-, Benzimidazolon-, Anthanthron-, Anthrachinon-, Chinacridon-, Dioxazin-, Perylen-, Thioindigo-, Triarylcarbonium- oder Diketopyrrolopyrrolpigmente enthält, insbesondere die Colour Index Pigmente Pigment Red 2, Pigment Red 3, Pigment Red 4, Pigment Red 5, Pigment Red 9, Pigment Red 12, Pigment Red 14, Pigment Red 38, Pigment Red 48:2, Pigment Red 48:3, Pigment Red 48:4, Pigment Red 53:1, Pigment Red 57:1, Pigment Red 112, Pigment Red 122, Pigment Red 144, Pigment Red 146, Pigment Red 147, Pigment Red 149, Pigment Red 168, Pigment Red 169, Pigment Red 170, Pigment Red 175, Pigment Red 176, Pigment Red 177, Pigment Red 179, Pigment Red 181, Pigment Red 184, Pigment Red 185, Pigment Red 187, Pigment Red 188, Pigment Red 207, Pigment Red 208, Pigment Red 209, Pigment Red 210, Pigment Red 214, Pigment Red 242, Pigment Red 247, Pigment Red 253, Pigment Red 254, Pigment Red 255, Pigment Red 256, Pigment Red 257, Pigment Red 262, Pigment Red 263, Pigment Red 264, Pigment Red 266, Pigment Red 269, Pigment Red 270, Pigment Red 272, Pigment Red 274, Pigment Violet 19, Pigment Violet 23 oder Pigment Violet 32; dessen Gelb-Präparation bevorzugt ein Pigment aus der Gruppe der Monoazo-, Disazo-, Benzimidazolin-, Isoindolinon-, Isoindolin- oder Perinonpigmente enthält, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 120, Pigment Yellow 126, Pigment Yellow 127, Pigment Yellow 128, Pigment Yellow 139, Pigment Yellow 151, Pigment Yellow 154, Pigment Yellow 155, Pigment Yellow 173, Pigment Yellow 174, Pigment Yellow 175, Pigment Yellow 176, Pigment Yellow 180, Pigment Yellow 181, Pigment Yellow 191, Pigment Yellow 194, Pigment Yellow 196, Pigment Yellow 213 oder Pigment Yellow 219; dessen Orange-Präparation bevorzugt ein Pigment aus der Gruppe der Disazo-, β-Naphthol-, Naphthol AS-, Benzimidazolon- oder Perinonpigmente enthält, insbesondere die Colour Index Pigmente Pigment Orange 5, Pigment Orange 13, Pigment Orange 34, Pigment Orange 36, Pigment Orange 38, Pigment Orange 43, Pigment Orange 62, Pigment Orange 68, Pigment Orange 70, Pigment Orange 71, Pigment Orange 72, Pigment Orange 73, Pigment Orange 74 oder Pigment Orange 81; dessen Grün-Präparation bevorzugt ein Pigment aus der Gruppe der Phthalocyaninpigmente enthält, insbesondere die Colour Index Pigmente Pigment Green 7 oder Pigment Green 36.

Zusätzlich können die Tintensets noch Nuancierfarbstoffe enthalten, vorzugsweise aus der Gruppe C.I. Acid Yellow 17 und C.I. Acid Yellow 23; C.I. Direct Yellow 86, C.I. Direct Yellow 98 und C.I. Direct Yellow 132; C.I. Reactive Yellow 37; C.I. Pigment Yellow 17, C.I. Pigment Yellow 74, C.I. Pigment Yellow 83, C.I. Pigment Yellow 97, C.I. Pigment Yellow 120, C.I. Pigment Yellow 139, C.I. Pigment Yellow 151, C.I. Pigment Yellow 155 und C.I. Pigment Yellow 180; C.I. Direct Red 1, C.I. Direct Red 11, C.I. Direct Red 37, C.I. Direct Red 62, C.I. Direct Red 75, C.I. Direct Red 81, C.I. Direct Red 87, C.I. Direct Red 89, C.I. Direct Red 95 und C.I. Direct Red 227; C.I. Acid Red 1, C.I. Acid Red 8, C.I. Acid Red 80, C.I. Acid Red 81, C.I. Acid Red 82, C.I. Acid Red 87, C.I. Acid Red 94, C.I. Acid Red 115, C.I. Acid Red 131, C.I. Acid Red 144, C.I. Acid Red 152, C.I. Acid Red 154, C.I. Acid Red 186, C.I. Acid Red 245, C.I. Acid Red 249 und C.I. Acid Red 289; C.I. Reactive Red 21, C.I. Reactive Red 22, C.I. Reactive Red 23, C.I. Reactive Red 35, C.I. Reactive Red 63, C.I. Reactive Red 106, C.I. Reactive Red 107, C.I. Reactive Red 112, C.I. Reactive Red 113, C.I. Reactive Red 114, C.I. Reactive Red 126, C.I. Reactive Red 127; C.I. Reactive Red 128, C.I. Reactive Red 129, C.I. Reactive Red 130, C.I. Reactive Red 131, C.I. Reactive Red 137, C.I. Reactive Red 160, C.I. Reactive Red 161, C.I. Reactive Red 174, C.I. Reactive Red 180 und C.I. Reactive Red 241.

Ink-Jet-Tinten enthalten im allgemeinen insgesamt 0,5 bis 15 Gew.-%, vorzugsweise 1,5 bis 8 Gew.-%, (trocken gerechnet) der erfindungsgemäßen Pigmentzubereitung. Mikroemulsionstinten basieren auf organischen Lösemitteln, Wasser und ggf. einer zusätzlichen hydrotropen Substanz (Grenzflächenvermittler). Mikroemulsionstinten enthalten im allgemeinen 0,5 bis 15 Gew.-%, vorzugsweise 1,5 bis 8 Gew.-%, der erfindungsgemäßen Pigmentzubereitung, 5 bis 99 Gew.-% Wasser und 0,5 bis 94,5 Gew.-% organisches Lösungsmittel und/oder hydrotrope Verbindung. "Solvent based" Ink-Jet-Tinten enthalten vorzugsweise 0,5 bis 15 Gew.-% der erfindungsgemäßen Pigmentzubereitung, 85 bis 99,5 Gew.-% organisches Lösungsmittel und/oder hydrotrope Verbindungen. Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60°C und ca. 140°C liegt. Hot-Melt Ink-Jet-Tinten bestehen z.B. im wesentlichen aus 20 bis 90 Gew.-% Wachs und 1 bis 10 Gew.-% der erfindungsgemäßen Pigmentzubereitung. Weiterhin können 0 bis 20 Gew.-% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. Kristallisation der Wachse) sowie 0 bis 2 Gew.-% Antioxidans enthalten sein.

Weiterhin sind die erfindungsgemäßen Pigmentzubereitungen auch als Farbmittel für Farbfilter, sowohl für die additive wie auch für die subtraktive Farberzeugung, wie beispielsweise in elektro-optischen Systemen wie Fernsehbildschirmen, LCD (liquid crystal displays), charge coupled devices, plasma displays oder electroluminescent displays, die wiederum aktive (twisted nematic) oder passive (supertwisted nematic) ferroelectric displays oder light-emitting diodes sein können, sowie als Farbmittel für elektronische Tinten ("electronic inks" bzw. "e-inks") oder "electronic paper" ("e-paper") geeignet.
Bei der Herstellung von Farbfiltern, sowohl reflektierender wie durchsichtiger Farbfilter, werden Pigmente in Form einer Paste oder als pigmentierte Photoresists in geeigneten Bindemitteln (Acrylate, Acrylester, Polyimide, Polyvinylalkohole, Epoxide, Polyester, Melamine, Gelantine, Caseine) auf die jeweiligen LCD-Bauteile (z.B. TFT-LCD = Thin Film Transistor Liquid Crystal Displays oder z.B. ((S) TN-LCD = (Super) Twisted Nematic-LCD) aufgebracht. Neben einer hohen Thermostabilität ist für eine stabile Paste bzw. einem pigmentierten Photoresist auch eine hohe Pigmentreinheit Voraussetzung. Darüber hinaus können die pigmentierten Color. Filter auch durch Ink-Jet-Druckverfahren oder andere geeignete Druckverfahren aufgebracht werden.

Die erfindungsgemäßen Pigmentzubereitungen zeichnen sich durch ihre sehr guten coloristischen und rheologischen Eigenschaften aus, insbesondere hohe Flockungsstabilität, leichte Dispergierbarkeit, gute Rheologie, hohe Farbstärke, Transparenz und Sättigung (Chroma). Sie sind in vielen Anwendungsmedien wie beispielsweise in lösemittelhaltigen oder Wasser-basierenden Lacken leicht und bis zu hohen Feinheiten dispergierbar. In Ink-Jet-Anwendungen ergeben sie eine hohe Farbstärke und Transparenz, beim Drucken auf beschichteten Papieren einen hohen Glanz sowie eine gute Lagerstabilität bei niedriger Viskosität der Ink-Jet-Tinte, die kein Verstopfen der Düsen zeigt.

In den folgenden Beispielen bedeuten Prozentangaben Gewichtsprozente und Teile Gewichtsteile, sofern nicht anders angegeben.

### Vergleichsbeispiel 1:

Ein Disazopigment der Formel (I) wurde gemäß dem Beispiel der GB-A-2 239 254 durch Kupplung von diazotiertem Dimethyl-2-aminoterephthalat mit 1,4-Bis(acetoacetylamino)benzol und anschließendem Erhitzen des entstandenen Rohpigmentes in Dimethylformamid für 2 Stunden bei 150°C hergestellt.

### Beispiel 1:

Die Herstellung des Rohpigments der Formel (I) erfolgt gemäß der GB-A-2 239 254 durch Kupplung von diazotiertem Dimethyl-2-aminoterephthalat mit Bis(acetoacetylamino)benzol, jedoch ohne anschließendes Erhitzen in Dimethylformamid.
Es werden 6,25 Teile Styrol-Maleinsäureanhydrid-Copolymer (SMA3000HNa^{®} Sartomer) und 6,25 Teile Pigmentdispergator der Formel (VII) mit 1350 Teilen Wasser aufgeschlämmt. Die Mischung wird für mehrere Stunden gerührt. Dann werden 38,4 Teile Natriumhydroxid und 250 Teile des Rohpigments zugefügt und die Mischung gerührt, bis eine homogene Aufschlämmung entstanden ist. Anschließend werden 150 Teile o-Dichlorbenzol zugegeben, und die Aufschlämmung wird für 1 Stunde unter Rückfluß gerührt. Der pH-Wert wird während des gesamten Finishprozesses oberhalb 10,5 gehalten. Dann wird das Lösungsmittel durch Wasserdampfdestillation aus dem Gemisch entfernt. Es wird filtriert und der Presskuchen mit entionisiertem Wasser pH-neutral gewaschen, getrocknet und anschließend auf einer Rotormühle gemahlen.

### Beispiel 2:

Es wird analog Beispiel 1 verfahren mit dem Unterschied, dass 2,5 Teile Pigmentdispergator der Formel (VII) und kein SMA3000HNa^{®} (Sartomer) eingesetzt werden.

### Beispiel 3:

Es wird analog Beispiel 2 verfahren mit dem Unterschied, dass 12,5 Teile Pigmentdispergator der Formel (VII) eingesetzt werden.

### Beispiel 4:

Es wird analog Beispiel 2 verfahren mit dem Unterschied, dass 2,5 Teile Pigmentdispergator der Formel (V) anstelle des Pigmentdispergators der Formel (VII) eingesetzt werden.

### Beispiel 5:

Es wird analog Beispiel 4 verfahren mit dem Unterschied, dass 12,5 Teile Pigmentdispergator der Formel (V) eingesetzt werden. Prüfung der coloristischen Eigenschaften der Pigmentzubereitungen in einem Alkyd-Melamin-Einbrennlack:
Zur Beurteilung der Eigenschaften der Pigmentzubereitung auf dem Lacksektor in wasserfreien, lösemittelbasierenden Lacksystemen wurde ein Alkyd-Melamin-Lack (AM) ausgewählt.

### Bestimmung der Transparenz:

Zur Bestimmung der Transparenz werden jeweils 6 Teile der Pigmentzubereitung und 19 Teile eines Anreibelacks vermischt und anschließend dispergiert. Dann werden 50 Teile eines Alkyd-Melamin-Auflackgemisches eingetragen, homogenisiert und der dabei entstehende Alkyd-Melamin-Lack (AM) auf eine Prüfkarte aufgezogen.

Der Anreibelack setzt sich dabei folgendermaßen zusammen:

| | |
|---|---|
| 50,0 Teile | Vialkyd AC451 n/70SNB (UCB Resins and Additives) |
| 50,0 Teile | Solventnaphtha, 1 e |
| 100 Teile | Anreibelack |

Das Alkyd-Melamin-Auflackgemisch setzt sich dabei folgendermaßen zusammen:

| | |
|---|---|
| 26,4 Teile | Vialkyd AC451 n/70SNB (UCB Resins and Additives) |
| 29,4 Teile | Vialkyd AC451/60SNA (UCB Resins and Additives) |
| 35,8 Teile | Maprenal MF600/55BIB (UCB Resins and Additives) |
| 2,17 Teile | n-Butanol |
| 2,17 Teile | Depanol I |
| 1,86 Teile | Butyldiglykol |
| 2,2 Teile | Solventnaphtha, 1e |
| 100 Teile | Alkyd-Melamin-Auflackgemisch |

Die Beurteilung der Transparenz erfolgt anschließend visuell:
- -VI: bedeutend deckender
- -V: wesentlich deckender
- -IV: deutlich deckender
- -III: merklich deckender
- -II: etwas deckender
- -I: eine Spur deckender
- /=/: etwa wie
- +I: eine Spur transparenter
- +II: etwas transparenter
- +III: merklich transparenter
- +IV: deutlich transparenter
- +V: wesentlich transparenter
- ±VI: bedeutend transparenter

Als Standard für die Transparenz wurde das Pigment aus Vergleichsbeispiel 1 herangezogen.

Bestimmung der Farbstärke und der CIELAB-Werte:

Zur Bestimmung der Farbstärke und der CIELAB-Werte werden jeweils 16 Teile des oben erhaltenen Alkyd-Melamin-Lacks mit 3 Teilen eines Weisslacks homogenisiert und auf eine Prüfkarte aufgezogen. Nach Einbrennen für 20 Minuten bei 140°C werden die coloristischen Eigenschaften (Farbstärke und CIELAB-Werte L*, a*, b*, C und h) mit Hilfe eines Spektrophotometers CM-3700d der Firma Minolta bestimmt.

Der Weisslack setzt sich dabei folgendermaßen zusammen:

| | |
|---|---|
| 52,63 Teile | Weisspaste (Standox GmbH, Artikel 256013) |
| 24,13 Teile | Vialkyd AC451/60SNA (UCB Resins and Additives) |
| 15,15 Teile | Maprenal MF600/55B1B (UCB Resins and Additives) |
| 0,7 Teile | BYK-331, 1 % in Solventnaphtha, 1e |
| 0,7 Teile | Butyldiglykol |
| 1,4 Teile | Diacetonalkohol |
| 2,8 Teile | Depanol I |
| 2,49 Teile | Solventnaphtha, 1e |
| 100 Teile | Weisslack |

Als Standard für die Farbstärke wurde das Pigment aus Vergleichsbeispiel 1 herangezogen.

Die Ergebnisse sind in der nachfolgenden Tabelle 1 zusammengestellt:

| | Transparenz | Farbstärke | L* | a* | b* | C | h |
|---|---|---|---|---|---|---|---|
| Vergleichsbeispiel 1 | Standard | 100 % | 92,6 | -3,7 | 50,1 | 50,3 | 94,3 |
| Beispiel 1 | +VI | 114 % | 92,7 | -4,9 | 57,4 | 57,6 | 94,8 |
| Beispiel 2 | +II | 118% | 93,0 | -5,0 | 52,7 | 53,0 | 95,5 |
| Beispiel 3 | +VI | 125% | 92,8 | -4,4 | 55,4 | 55,6 | 94,5 |
| Beispiel 4 | +VI | 122 % | 92,8 | -5,2 | 53,3 | 53,6 | 95,6 |
| Beispiel 5 | /=/ | 115 % | 92,9 | -4,6 | 54,6 | 54,7 | 94,8 |

Die erfindungsgemäßen Pigmentzubereitungen zeichnen sich im Vergleich mit dem im Vergleichsbeispiel 1 erhaltenen Pigment durch eine sehr hohe Farbstärke, einen hellen und grüneren Farbton und vor allem durch eine wesentlich höhere Reinheit aus. Die erfindungsgemäßen Pigmentzubereitungen der Beispiele 1, 3 und 4 weisen zudem gegenüber dem Vergleichsbeispiel 1 eine bedeutend höhere Transparenz auf. Prüfung der coloristischen Eigenschaften der Pigmentzubereitungen in einem wässrigen Basisfirnis-System:

Bestimmung der Farbstärke und der CIELAB-Werte:
Zur Bestimmung der Farbstärke und der CIELAB-Werte wird jeweils 1 Teil der Pigmentzubereitung mit 9 Teilen eines wässrigen Basisfirnis-Systems vermischt und anschließend dispergiert, wobei ein Anreibegemisch entsteht. Für eine Weissaufhellung werden jeweils 2 Teile dieses Anreibegemisches mit 100 Teilen einer Standard-Weissdispersion (Weissdispersionsfarbe 236/14E, Esser) homogenisiert und auf eine Prüfkarte aufgezogen. Anschließend werden die coloristischen Eigenschaften (Farbstärke und CIELAB-Werte L*, a*, b*, C und h) mit Hilfe eines Spektrophotometers CM-3700d der Firma Minolta bestimmt.

Das wässrige Basisfirnis-System setzt sich dabei folgendermaßen zusammen:

| | |
|---|---|
| 56,54 Teile | Ethylenglykol |
| 19,83 Teile | E-Wasser |
| 7,46 Teile | ®Igepal CO-630 |
| 12,67 Teile | ®Geropon WS-251 |
| 3,2 Teile | ®Tamol 731A |
| 0,3 Teile | Byk-019 Defoamer |
| 100 Teile | wässriges Basisfirnis-System |

Bestimmung der Transparenz:
Zur Bestimmung der Transparenz werden jeweils 4 Teile des Anreibegemisches mit 9 Teilen destilliertem Wasser und 7 Teilen eines Acrylatfirnisses (®Viacryl SC 175 W/40) homogenisiert und auf eine Prüfkarte aufgezogen. Als Standard für die Farbstärke und die Transparenz wurde das Pigment aus Vergleichsbeispiel 1 herangezogen: Die Beurteilung der Transparenz erfolgte analog der des Alkyd-Melamin-Einbrennlacks.

Die Ergebnisse sind in nachfolgender Tabelle 2 zusammengestellt:

| | Transparenz | Farbstärke | L* | a* | b* | C | h |
|---|---|---|---|---|---|---|---|
| Vergleichsbeispiel 1 | Standard | 100 % | 93,8 | -5,9 | 31,1 | 31,7 | 100,7 |
| Beispiel 1 | +V | 159% | 93,7 | -7,1 | 37,2 | 37,9 | 100,9 |
| Beispiel 2 | +V | 173% | 93,8 | -7,2 | 37,1 | 37,8 | 101,0 |
| Beispiel 3 | +V | 171% | 93,8 | -6,9 | 38,4 | 39,1 | 100,2 |
| Beispiel 4 | +V | 152 % | 93,9 | -7,3 | 34,1 | 35,0 | 102,1 |
| Beispiel 5 | +IV | 128% | 93,8 | -6,7 | 34,4 | 35,0 | 101,0 |

Die erfindungsgemäßen Pigmentzubereitungen zeichnen sich im Vergleich mit dem im Vergleichsbeispiel 1 erhaltenen Pigment durch eine sehr hohe Farbstärke, durch eine bedeutend höhere Reinheit und durch eine deutlich bis wesentlich höhere Transparenz aus.

### Herstellung von Farbmittelpräparationen:

Die Pigmentzubereitung wird, entweder als Pulver oder als Presskuchen, zusammen mit den nachstehend genannten Dispergiermitteln, dem organischen Lösemittel und den anderen Zusätzen in entionisiertem Wasser angeteigt und dann mit einem Dissolver homogenisiert und vordispergiert. Die anschließende Feindispergierung erfolgt unter Kühlung mit Hilfe einer Perlmühle über einen Zeitraum von 3 Stunden. Im Anschluss wird die Dispersion mit entionisiertem Wasser auf die gewünschte Pigmentendkonzentration eingestellt.

Die in den folgenden Beispielen beschriebenen Farbmittelpräparationen wurden nach dem zuvor beschriebenen Verfahren hergestellt, wobei die folgenden Bestandteile in den angegebenen Mengen so verwendet wurden, dass 100 Teile der jeweiligen Farbmittelpräparation entstehen und Teile Gewichtsteile bedeuten.

### Vergleichsbeispiel A:

- 20 Teile: Pigment der Formel (I), hergestellt entsprechend dem Vergleichsbeispiel 1
- 2,5 Teile: Acrylatharz, Na-Salz (Dispergiermittel)
- 1,2 Teile: Polyethylenglykolalkylether, Na-Salz (Dispergiermittel)
- 7,5 Teile: Propylenglykol
- 0,2 Teile: Konservierungsmittel
- Rest: Wasser

### Beispiel A:

Die Herstellung der Farbmittelpräparation erfolgte analog Vergleichsbeispiel A, wobei anstelle des Pigments der Formel (I), hergestellt entsprechend dem Vergleichsbeispiel 1, die erfindungsgemäße Pigmentzubereitung aus Beispiel 1 eingesetzt wurde.

### Beispiel B:

Die Herstellung der Farbmittelpräparation erfolgte analog Vergleichsbeispiel A, wobei anstelle des Pigments der Formel (I), hergestellt entsprechend dem Vergleichsbeispiel 1, die erfindungsgemäße Pigmentzubereitung aus Beispiel 3 eingesetzt wurde.

### Beispiel C:

Die Herstellung der Farbmittelpräparation erfolgte analog Vergleichsbeispiel A, wobei anstelle des Pigments der Formel (I), hergestellt entsprechend dem Vergleichsbeispiel 1, die erfindungsgemäße Pigmentzubereitung aus Beispiel 5 eingesetzt wurde.

### Prüfung der physikalischen Eigenschaften der Farbmittelpräparationen:

Die für den Ink-Jet-Druck geeigneten Farbmittelpräparationen müssen eine Reihe von physikalischen Eigenschaften erfüllen, so sollte beispielsweise die mittlere Teilchengröße D₅₀ einen Wert von 150 nm, vorzugsweise 100 nm, nicht überschreiten und die Teilchengrößenverteilung möglichst eng sein. Die Teilchengrößen D₂₅, D₅₀ und D₇₅ der Farbmittelpräparationen der Beispiele A bis C und des Vergleichsbeispiels A wurden mit der CHDF-Methode (Capillary Hydrodynamic Fractionation) bestimmt.

Die Ergebnisse sind in nachfolgender Tabelle 3 zusammengestellt:

| | D₂₅ [nm] | D₅₀ [nm] | D₇₅ [nm] |
|---|---|---|---|
| Vergleichsbeispiel A | 105 | 195 | 291 |
| Beispiel A | 51 | 81 | 125 |
| Beispiel B | 46 | 67 | 104 |
| Beispiel C | 56 | 103 | 174 |

Die aus den erfindungsgemäßen Pigmentzubereitungen hergestellten Farbmittelpräparationen der Beispiele A bis C besitzen gegenüber der Farbmittelpräparation des Vergleichsbeispiels A deutlich kleinere Teilchengrößen.

### Prüfung der drucktechnischen Eigenschaften der Farbmittelpräparationen:

### Beurteilung der drucktechnischen Eigenschaften:

Um die drucktechnischen Eigenschaften zu beurteilen, wurden aus den Farbmittelpräparationen der Beispiele A bis C und des Vergleichsbeispiels A Testtinten hergestellt und deren Verdruckbarkeit mit einem thermischen Ink-Jet-Drucker untersucht.

Für die Herstellung der Testtinten wurden die Farbmittelpräparationen zunächst über einen 1 µm-Filter feinfiltriert, um Mahlkörperabrieb und eventuelle Grobanteile abzutrennen. Danach wurden die filtrierten Farbmittelpräparationen mit Wasser verdünnt und mit weiteren niedermolekularen Alkoholen und Polyolen versetzt, wobei der Pigmentgehalt auf 5 Gew.-%, bezogen auf die Tinte (100 Gew.-%), eingestellt wurde.

### Beurteilung der physikalischen Eigenschaften der Testtinten:

Für den Ink-Jet-Druck geeignete Tinten sollten eine Reihe von physikalischen Eigenschaften aufweisen. Beispielsweise sollten die Teilchengrößen möglichst klein sein (D₅₀ für viele Systeme vorzugsweise < 100 nm) bei gleichzeitig enger Teilchengrößenverteilung um ein Verstopfen der Düsen zu verhindern und um Ink-Jet-Drucke von hoher Transparenz und Brillianz zu erzielen. Die Tinten sollten zudem eine möglichst geringe Viskosität (vorzugsweise < 5 mPas) besitzen, welche sich auch bei Lagerung bei gegenüber Raumtemperatur erhöhter oder erniedrigter Temperatur nicht wesentlich ändert.

### Viskosität:

Die Viskosität wurde mit einem Kegel-Platte-Viskosimeter (Roto Visco 1) der Firma Haake bestimmt (Titankegel: ∅ 60 mm, 1 °), wobei die Abhängigkeit der Viskosität von der Schergeschwindigkeit in einem Bereich zwischen 0 und 700 s⁻¹ untersucht wurde. Die in Tabelle 4 genannten Viskositätswerte wurden bei einer Schergeschwindigkeit von 400 s⁻¹ gemessen. Für eine Beurteilung der Lagerstabilität der Testtinten wurde die Viskosität (1) direkt nach der Herstellung der Teststinte, (2) nach einwöchiger Lagerung bei 60°C und (3) nach vierwöchiger Lagerung bei 60°C gemessen.
Die Messung der Teilchengrößen D₂₅, D₅₀ und D₇₅ der Testtinten erfolgte analog den Farbmittelpräparationen.

Die Ergebnisse sind in nachfolgender Tabelle 4 zusammengestellt:

| | Viskosität [mPas] | | | D₂₅ [nm] | D₅₀ [nm] | D₇₅ [nm] |
|---|---|---|---|---|---|---|
| | frisch | 7 Tage / 60°C | 28 Tage / 60°C | | | |
| Testtinte Vergleichsbeispiel A | 5,2 | 43,0 | fest | 91 | 175 | 255 |
| Testtinte Beispiel A | 4,5 | 3,8 | 3,6 | 51 | 77 | 125 |
| Testtinte Beispiel B | 4,1 | 3,7 | 3,7 | 51 | 81 | 132 |
| Testtinte Beispiel C | 4,5 | 4,0 | 4,3 | 57 | 95 | 161 |

Mit dem Drucker i560 (Canon) wurden Testbilder auf handelsübliche Normalpapiere (Kopierpapiere) und Spezialpapiere (Premium Qualität) gedruckt. Die Beurteilung bzgl. Qualität und Güte des Druckbildes erfolgte durch visuelle Betrachtung.

### Glanzmessung:

Zur Messung des Glanzes wurden die Testtinten mit dem Drucker i560 (Canon) im Vollflächendruck auf Premium Glossy Paper der Firma Epson gedruckt und der Glanz mit Hilfe eines Glanzmessgerätes der Firma Byk Gardner im 20° bzw. im 60° Winkel gemessen.

Die Ergebnisse sind in nachfolgender Tabelle 5 zusammengestellt:

| | Glanz 20° | Glanz 60° |
|---|---|---|
| Testtinte Vergleichsbeispiel A | 40 | 72 |
| Testtinte Beispiel A | 93 | 110 |
| Testtinte Beispiel B | 96 | 115 |
| Testtinte Beispiel C | 80 | 114 |

Die aus den erfindungsgemäßen Farbmittelpräparationen der Beispiele A bis C hergestellten Testtinten besitzen kleine Teilchengrößen (D₅₀ < 100 nm), eine niedrige Viskosität (< 5 mPas) und zeigen ein sehr gutes Druckverhalten. Insbesondere ergeben sich eine hohe Zuverlässigkeit der jeweiligen Testtinte im Druckverlauf (sehr gutes Andruckverhalten, keine Düsenverstopfung) und ein sehr gleichmäßiges Druckbild von exzellenter Qualität auf den verschiedenen verwendeten Papieren. Drucke der aus den erfindungsgemäßen Farbmittelpräparationen der Beispiele A bis C hergestellten Testtinten auf unbeschichtetem Papier (plain paper) zeigen gegenüber der Testtinte des Vergleichsbeispiels A eine hohe optische Dichte und auf Premium Glossy Paper einen sehr hohen Glanz.
Die aus den erfindungsgemäßen Farbmittelpräparationen der Beispiele A bis C hergestellten Testtinten erfüllen somit die im Ink-Jet-Druck gestellten Anforderungen in ausgezeichneter Weise.

## Patentansprüche

1. Pigmentzubereitung auf Basis von C.I. Pigment Yellow 155, enthaltend 0,1 bis 50 Gew.-%, bezogen auf das Gewicht von C.I. Pigment Yellow 155, mindestens eines Pigmentdispergators aus der Gruppe der mit mindestens einer Sulfonsäuregruppe substituierten Monoazo- oder Disazopigmente, **dadurch gekennzeichnet, dass**
der Pigmentdispergator eine Verbindung der Formel (VI) oder (II) ist 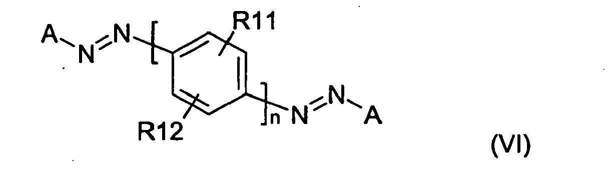 worin
R11 und R12 unabhängig voneinander
H, Halogen, ein substituierter oder unsubstituierter, verzweigter oder unverzweigter C₁-C₁₀-Alkyl- oder C₃-C₁₀-Cycloalkylrest oder ein substituierter oder unsubstituierter, verzweigter oder unverzweigter C₂-C₁₀-Alkenyl- oder C₃-C₁₀-Cycloalkenylrest oder C₁-C₁₀-Alkoxy sind, und
n 1 oder 2, vorzugsweise 2, bedeutet,
mit der Maßgabe, dass mindestens einer der beiden terminalen Phenylringe im Rest A mit mindestens einer Sulfonsäuregruppe substituiert ist; 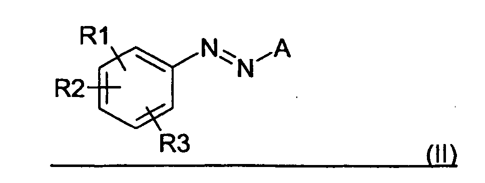 worin A für einen Rest der Formel (III) oder (IV) steht 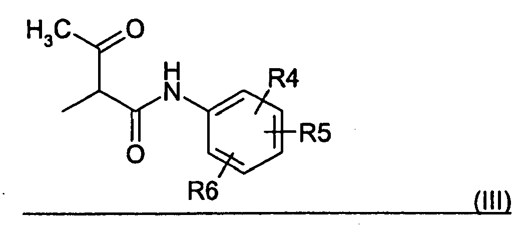 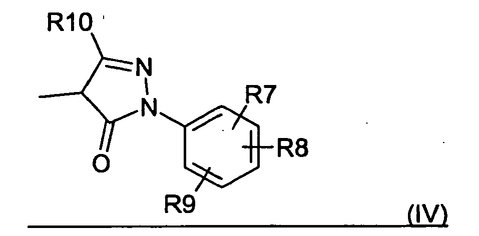 worin
R1, R2, R3, R4, R5, R6, R7, R8 und R9 unabhängig voneinander
H, Halogen, SO₃M, ein substituierter oder unsubstituierter, verzweigter oder unverzweigter C₁-C₁₀-Alkyl- oder C₃-C₁₀-Cycloalkylrest oder ein substituierter oder unsubstituierter, verzweigter oder unverzweigter C₂-C₁₀-Alkenyl- oder C₃-C₁₀-Cycloalkenylrest, Aryl, Aryloxy, Aryl(C₁-C₄)alkyl, Hetaryl, Hetaryloxy, Hetaryl(C₁-C₄)alkyl oder C₁-C₁₀-Alkoxy sind,
R10 H, COOM, COO(C₁-C₁₀)alkyl, ein substituierter oder unsubstituierter, verzweigter oder unverzweigter C₁-C₁₀-Alkyl- oder C₃-C₁₀-Cycloalkylrest ist, und
M H, ein einwertiges Metallkation, NH₄⁺, ein sekundäres, tertiäres oder quartäres Ammoniumion bedeuten, mit der Maßgabe, dass mindestens einer der beiden Phenylringe mit mindestens einer Sulfonsäuregruppe substituiert ist;
und **dadurch** hergestellt, dass ein PY 155-Rohpigment in einer Mischung aus Wasser und einem organischen Lösemittel mit einem Siedepunkt von über 100°C, bei alkalischem pH, und in Gegenwart von 0,1 bis 50 Gew.-%, bezogen auf das Gewicht von C.I. Pigment Yellow 155, des Pigmentdispergators auf eine Temperatur von über 60°C erhitzt wird.

2. Pigmentzubereitung nach Anspruch 1, enthaltend 0,5 bis 20 Gew.-% des Pigmentdispergators.

3. Pigmentzubereitung nach Anspruch 1 oder 2 , **dadurch gekennzeichnet, dass** der Pigmentdispergator eine Verbindung der Formel (V) ist

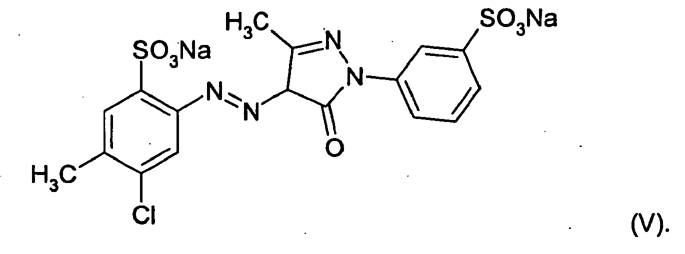

4. Pigmentzubereitung nach Anspruch 1 oder 2, **dadurch gekennzeichnet, dass** der Pigmentdispergator eine Verbindung der Formel (VII) ist

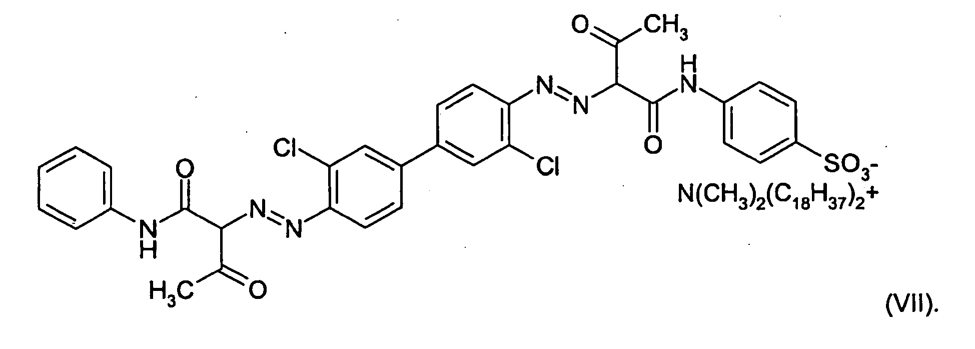

5. Verfahren zur Herstellung einer Pigmentzubereitung nach einem oder mehreren der Ansprüche 1 bis 4, **dadurch gekennzeichnet, dass** ein PY 155-Rohpigment in einer Mischung aus Wasser und einem organischen Lösemittel mit einem Siedepunkt von über 100°C, bei alkalischem pH, und in Gegenwart von 0,1 bis 50 Gew.-%, bezogen auf das Gewicht von C.I. Pigment Yellow 155, des Pigmentdispergators auf eine Temperatur von über 60°C erhitzt wird.

6. Verfahren nach Anspruch 5, **dadurch gekennzeichnet, dass** das organische Lösemittel ein aromatisches Lösemittel ist.

7. Verfahren nach Anspruch 5 oder 6, **dadurch gekennzeichnet, dass** das organische Lösemittel aus der Gruppe Chlorbenzol, Brombenzol, der Dichlorbenzole und der Trichlorbenzole ausgewählt ist.

8. Verfahren nach einem oder mehreren der Ansprüche 5 bis 7, **dadurch gekennzeichnet, dass** auf eine Temperatur von über 90°C erhitzt wird.

9. Verfahren nach einem oder mehreren der Ansprüche 5 bis 8, **dadurch gekennzeichnet, dass** der pH-Wert größer oder gleich 9 ist.

10. Verwendung einer Pigmentzubereitung nach einem oder mehreren der Ansprüche 1 bis 4, zum Pigmentieren von hochmolekularen organischen Materialien, beispielsweise von Kunststoffen, Harzen, Lacken, Anstrichfarben, elektrophotographischen Tonern und Entwicklern, Elektretmaterialien, Farbfiltern sowie von Tinten, Druckfarben und Saatgut.

11. Verwendung nach Anspruch 10, **dadurch gekennzeichnet, dass** die Tinte eine Ink-Jet-Tinte ist.

## Claims

1. A pigment preparation based on C.I. Pigment Yellow 155, containing 0.1 % to 50% by weight, based on the weight of C.I. Pigment Yellow 155, of at least one pigment dispersant from the group of monoazo or disazo pigments substituted with at least one sulfonic acid group, **characterized in that** the pigment dispersant is a compound of the formula (VI) or (II) 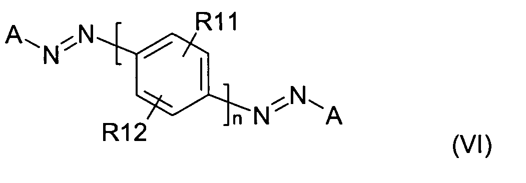 where
R11 and R12 are independently
H, halogen, a substituted or unsubstituted, branched or unbranched C₁₋C₁₀-alkyl or C₃-C₁₀-cycloalkyl radical or a substituted or unsubstituted, branched or unbranched C₂-C₁₀-alkenyl or C₃-C₁₀-cycloalkenyl radical or C₁-C₁₀-alkoxy, and
n is 1 or 2, preferably 2,
with the proviso that at least one of the two terminal phenyl rings in the A radical is substituted with at least one sulfonic acid group; 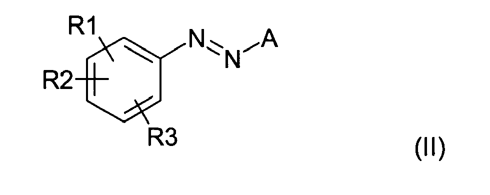
where A is a radical of the formula (III) or (IV) 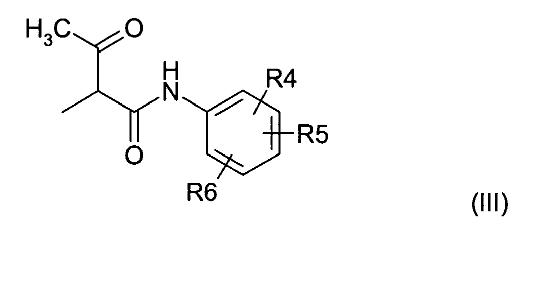 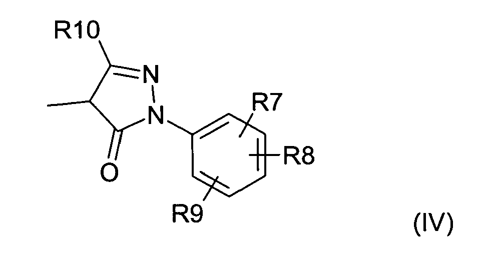 where
R1, R2, R3, R4, R5, R6, R7, R8 and R9 are independently
H, halogen, SO₃M, a substituted or unsubstituted, branched or unbranched C₁-C₁₀-alkyl or C₃-C₁₀-cycloalkyl radical or a substituted or unsubstituted, branched or unbranched C₂-C₁₀-alkenyl or C₃-C₁₀-cycloalkenyl radical, aryl, aryloxy, aryl(C₁-C₄)alkyl, hetaryl, hetaryloxy, hetaryl(C₁-C₄)alkyl or C₁-C₁₀-alkoxy,
R10 is H, COOM, COO(C₁-C₁₀)alkyl, a substituted or unsubstituted, branched or unbranched C₁-C₁₀-alkyl or C₃-C₁₀-cycloalkyl radical, and
M is H, a univalent metal cation, NH₄⁺, a secondary, tertiary or quaternary ammonium ion,
with the proviso that at least one of the two phenyl rings is substituted with at least one sulfonic acid group;
and obtained by heating a PY 155 crude pigment in a mixture of water and an organic solvent having a boiling point of above 100°C, at an alkaline pH, and in the presence of 0.1 % to 50% by weight, based on the weight of C.I. Pigment Yellow 155, of the pigment dispersant to a temperature of above 60°C.

2. A pigment preparation according to claim 1, containing 0.5% to 20% by weight of the pigment dispersant.

3. A pigment preparation according to claim 1 to 2, **characterized in that** the pigment dispersant is a compound of the formula (V)

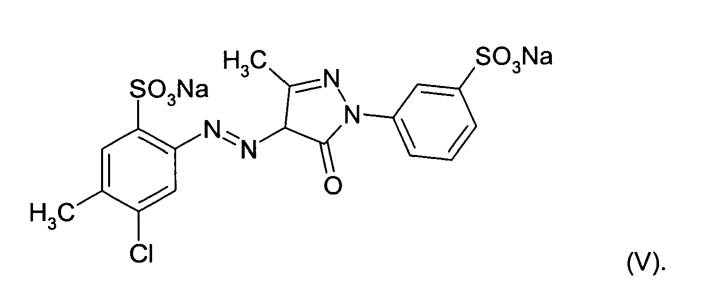

4. A pigment preparation according to claim 1 or 2, **characterized in that** the pigment dispersant is a compound of the formula (VII)

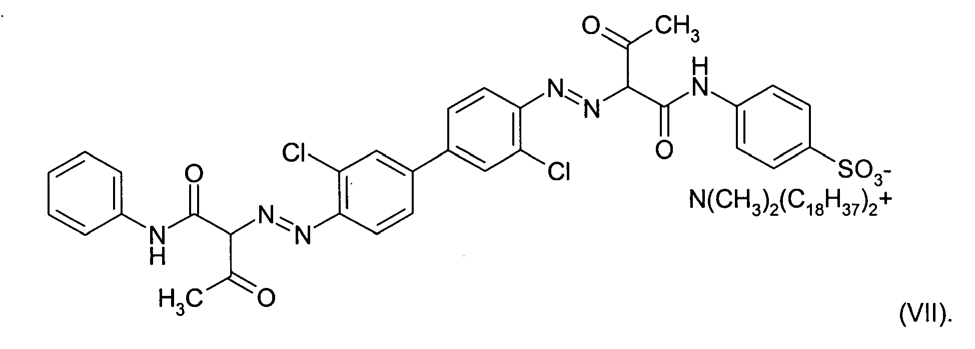

5. A process for producing a pigment preparation according to one or more of claims 1 to 4, which comprises heating a PY 155 crude pigment in a mixture of water and an organic solvent having a boiling point of above 100°C, at an alkaline pH, and in the presence of 0.1 % to 50% by weight, based on the weight of C.I. Pigment Yellow 155, of the pigment dispersant to a temperature of above 60°C.

6. A process according to claim 5, wherein the organic solvent is an aromatic solvent.

7. A process according to claim 5 or 6, wherein the organic solvent is selected from the group consisting of chlorobenzene, bromobenzene, dichlorobenzenes and trichlorobenzenes.

8. A process according to one or more of claims 5 to 7, wherein the heating is to a temperature of above 90°C.

9. A process according to one or more of claims 5 to 8, wherein the pH is not less than 9.

10. The use of a pigment preparation according to one or more of claims 1 to 4 for pigmentation of macromolecular organic materials, for example plastics, resins, coatings, paints, electrophotographic toners and developers, electret materials, color filters and also liquid inks, printing inks and seed.

11. The use according to claim 10 wherein the liquid ink is an ink jet ink.

## Revendications

1. Composition de pigment à base de C.I. Pigment Yellow 155, contenant de 0,1 à 50 % en poids, par rapport au poids de C.I. Pigment Yellow 155, d'au moins un dispersant pigmentaire choisi dans le groupe des pigments monoazoïques ou disazoïques substitués par au moins un groupe sulfo, **caractérisée en ce que** le dispersant pigmentaire est un composé de formule (VI) ou (II) 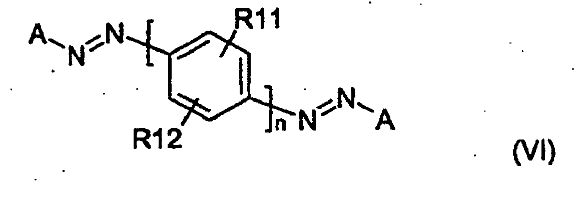 dans laquelle
R11 et R12 représentent, indépendamment l'un de l'autre, un atome d'hydrogène ou d'halogène, un radical alkyle en C₁-C₁₀ ou cycloalkyle en C₃-C₁₀ ramifié ou non ramifié, substitué ou non substitué, un radical alcényle en C₂-C₁₀ ou cycloalcényle en C₃-C₁₀ ramifié ou non ramifié, substitué ou non substitué, ou un groupe alcoxy en C₁-C₁₀, et
n représente 1 ou 2, de préférence 2,
étant entendu qu'au moins l'un des deux cycles phényle terminaux dans le radical A est substitué par au moins un groupe sulfo; 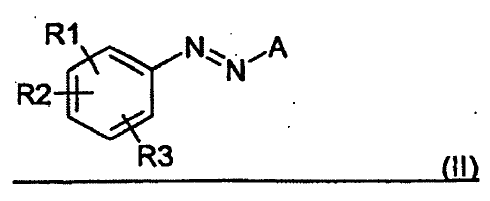
où A représente un radical de formule (III) ou (IV) 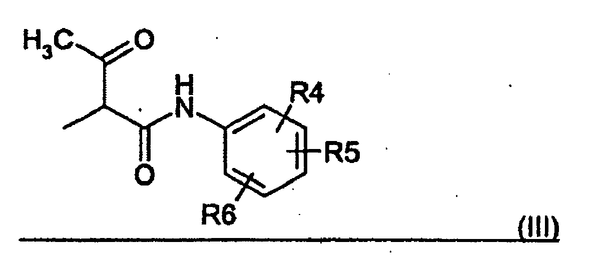 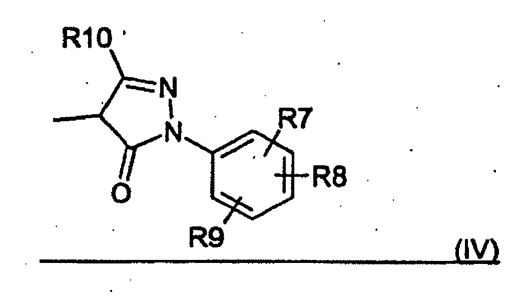 formules dans lesquelles
R1, R2, R3, R4, R5, R6, R7, R8 et R9 représentent, indépendamment les uns des autres, un atome d'hydrogène ou d'halogène, SO₃M, un radical alkyle en C₁-C₁₀ ou cycloalkyle en C₃-C₁₀ ramifié ou non ramifié, substitué ou non substitué, un radical alcényle en C₂-C₁₀ ou cycloalcényle en C₃-C₁₀ ramifié ou non ramifié, substitué ou non substitué, aryle, aryloxy, aryl-alkyle(C₁-C₄), hétéroaryle, hétéroaryloxy, hétéroarylalkyle(C₁-C₄) ou alcoxy en C₁-C₁₀,
R10 est H, COOM, un radical COO-alkyle(C₁-C₁₀), un radical alkyle en C₁-C₁₀ ou cycloalkyle en C₃-C₁₀ ramifié ou non ramifié, substitué ou non substitué, et
M représente H, un cation métallique monovalent, NH₄⁺, un ion ammonium secondaire, tertiaire ou quaternaire,
étant entendu qu'au moins l'un des deux cycles phényle est substitué par au moins un groupe sulfo ;
et est préparée par chauffage à une température de plus de 60 °C d'un pigment brut PY 155 dans un mélange d'eau et d'un solvant organique ayant un point d'ébullition de plus de 100 °C, à pH alcalin et en présence de 0,1 à 50 % en poids, par rapport au poids de C.I. Pigment Yellow 155, du dispersant pigmentaire.

2. Composition de pigment selon la revendication 1, contenant de 0,5 à 20 % en poids du dispersant pigmentaire.

3. Composition de pigment selon la revendication 1 ou 2, **caractérisée en ce que** le dispersant pigmentaire est un composé de formule (V)

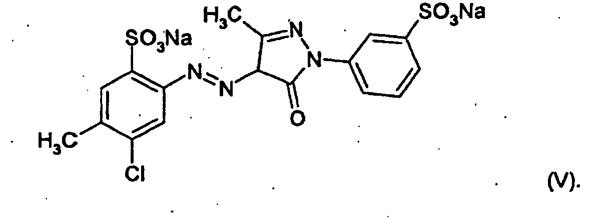

4. Composition de pigment selon la revendication 1 ou 2, **caractérisée en ce que** le dispersant pigmentaire est un composé de formule (VII)

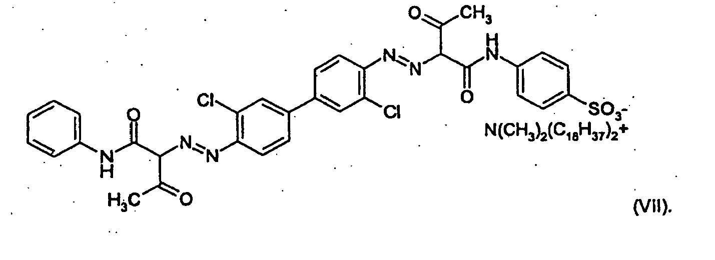

5. Procédé pour la préparation d'une composition de pigment selon une ou plusieurs des revendications 1 à 4, **caractérisé en ce qu'**on chauffe à une température de plus de 60 °C un pigment brut PY 155 dans un mélange d'eau et d'un solvant organique ayant un point d'ébullition de plus de 100 °C, à pH alcalin et en présence de 0,1 à 50 % en poids, par rapport au poids de C.I. Pigment Yellow 155, du dispersant pigmentaire.

6. Procédé selon la revendication 5, **caractérisé en ce que** le solvant organique est un solvant aromatique.

7. Procédé selon la revendication 5 ou 6, **caractérisé en ce que** le solvant organique est choisi dans le groupe constitué par le chlorobenzène, le bromobenzène, les dichlorobenzènes et les trichlorobenzènes.

8. Procédé selon une ou plusieurs des revendications 5 à 7, **caractérisé en ce qu'**on chauffe à une température de plus de 90 °C.

9. Procédé selon une ou plusieurs des revendications 5 à 8, **caractérisé en ce que** le pH est égal ou supérieur à 9.

10. Utilisation d'une composition de pigment selon une ou plusieurs des revendications 1 à 4, pour la pigmentation de matières organiques de masse moléculaire élevée, par exemple de matières plastiques, de résines, de vernis, de peintures, de toners et développeurs électrophotographiques, de matériaux pour électret, de filtres colorés ainsi que d'encres, d'encres d'imprimerie et de semences.

11. Utilisation selon la revendication 10, **caractérisée en ce que** l'encre est une encre pour impression par jet d'encre.
